# EUROPEAN PATENT SPECIFICATION

(11) **EP 4 223 386 B1**
(45) Date of publication and mention of the grant of the patent: **17.09.2025**
(21) Application number: 22177054.8
(22) Date of filing: 02.06.2022
(51) Int. Cl.: B01D 46/00, B01D 46/24, B01D 46/64

(54) **FILTER SYSTEM HAVING A PRIMARY AND A SECONDARY FILTER ELEMENT, SECONDARY FILTER ELEMENT AND METHOD**
FILTERSYSTEM, DAS EIN PRIMÄR- UND EIN SEKUNDÄRFILTERELEMENT AUFWEIST, SEKUNDÄRFILTERELEMENT UND VERFAHREN
SYSTÈME DE FILTRE COMPORTANT UN ÉLÉMENT DE FILTRE PRIMAIRE ET UN ÉLÉMENT DE FILTRE SECONDAIRE, ÉLÉMENT DE FILTRE SECONDAIRE ET PROCÉDÉ

(30) Priority: 03.02.2022 EP 22155009; 03.02.2022 EP 22155008
(43) Date of publication of application: 09.08.2023
(73) Proprietor: MANN+HUMMEL GmbH, 71636 Ludwigsburg (DE)
(72) Inventor: ALAGOUDA, Bharatesh, 591201 Chikodi (IN); SHRIMALI, Mayank, 560072 Bangalore (IN); YADIYAL, Sachin, 575006 Mangalore (IN); RAJHARSHA, Nimmagadda, 584103 Raichur (IN)
(74) Representative: Mann + Hummel Intellectual Property

(56) References cited:
- EP-A1- 3 756 746
- EP-A1- 3 756 748
- US-A1- 2015 182 082
- US-B1- 6 626 715

## Description

### Technical Field

The invention relates to a filter system having a primary and a secondary filter element and a secondary filter element for such a filter system, in particular for an air filter system of an internal combustion engine. The invention further relates to a method of manufacturing a secondary filter element.

### Prior Art

It is known to use air filters in order to control combustion intake air for internal combustion engines in passenger vehicles, commercial vehicles, work machines, agricultural vehicles, but also stationary generators and the like. Such air filters generally comprise a housing, an air inlet, and an air outlet, with a removable and replaceable main or primary filter element disposed within the housing. The housing often includes a maintenance cover for access to the filter element inside the housing during maintenance. For this purpose, the filter element can be removed and either replaced by a new filter element, overtaken and reused, or replaced by a previously used, but overtaken filter element.

The filter elements of air filters are usually replaced after a certain operating time. Depending on the dust load on the filter element during usage, the service life of a filter can be several days, for example when used in construction machines, up to several months in a less dusty environment.

In particular in the case of frequent exchanges of filter elements, reliable and process-proof sealing of the filter element in a housing is important. The sealing should be temperature resistant and vibration tested. The sealing of the filter element must also be ensured on systems or devices which are exposed to strong vibrations. At the same time, however, the filter element itself should preferably not have any metallic elements, so that it can be disposed of thermally without problems. In order to protect the clean side of an air cleaner system of an internal combustion engine against penetrating dirt particles when replacing the main filter element, a so-called "secondary filter element" is used, which remains in the filter housing during replacement of the primary filter element. The secondary filter element is usually located on the clean side of the filter element, for example inside the primary filter element, and is connected to the housing of the filter system. The secondary filter element itself also has a filter medium which keeps residual dirt particles away from the filter outlet in the air stream.

Optionally, the secondary filter element itself can be exchanged as it can be loaded with dust particles. The lifetime of the secondary filter element, however, is much longer than the lifetime of the primary filter element.

US 8,480,778 B2 discloses an air filter system comprising a secondary filter element which consists of a filter medium configured as a hollow cylinder which is closed at one end of the cylinder by a closed end cap and is open at the opposing end. With the open end it can be slipped over a support tube connected to the filter housing, thus protecting the outlet of the filter system against dirt particles. The primary filter element rests on the free end of the supporting tube and thus on the end cap of the secondary filter element. The primary filter element is mounted on the secondary filter element.

EP 3 756 748 A1 discloses a filter system comprising a housing, a fluid inlet formed in a housing wall, a fluid outlet formed in a housing wall, a primary filter element and a secondary filter element, both being accommodated in the housing. The secondary filter element is arranged downstream the primary filter element on a stand pipe, the stand pipe being rigidly connected to one of the housing walls, the inside of the stand pipe being in fluid connection with the fluid outlet. The secondary filter element comprises a filter medium forming a body having at least one longitudinal seam along a longitudinal axis, and the filter body of the secondary filter element has a first edge at one region which is curved in an initial unwound state of the filter medium and straight in a final wound state of the filter medium forming the filter body and a second edge at the opposite region of the filter body with respect to the longitudinal axis which is straight in an initial unwound state of the filter medium and curved in a final wound state of the filter medium forming the filter body. EP 3 756 748 A1 further relates to a secondary filter element for such a filter system and a housing wall.

EP 3 756 746 A1 discloses a filter system comprising a housing, a fluid inlet formed in a housing wall, a fluid outlet formed in a housing wall, a primary filter element and a secondary filter element, both being accommodated in the housing. The secondary filter element is arranged downstream the primary filter element on a stand pipe, the stand pipe being rigidly connected to one of the housing walls, the inside of the stand pipe being in fluid connection with the fluid outlet. The secondary filter element comprises a filter medium forming a body having at least one longitudinal seam along a longitudinal axis and an end cap at its top region, The secondary filter element and the stand pipe are mutually connected at one of their top regions by connection elements. The secondary filter element and the stand pipe are configured with mutual self-positioning elements to arrange the secondary filter element on the stand pipe in a defined rotational position with respect to one or more struts of the stand pipe. The EP 3 756 746 A1 further relates to a secondary filter element for such a filter system.

US 6,626,715 B1 discloses a filter wrap that wraps around an air filter of a marine diesel engine for preventing moist salt laden air from being drawn through an exhaust duct, one or more cylinders, a turbocharger and the air filter when the engine is shut down and an exhaust fan is drawing hot air out of an engine room of a large pleasure boat.

US 2015/182082 A1 discloses a truncated cone filter comprising a mesh material, an upper hole with a diameter slightly larger than a power transfer pipe, and a lower hole slightly larger than a diameter of a duct. In one embodiment, the duct is modified by drilling holes into a duct side surface to provide supplemental area for supplemental inlet air flow.

### Disclosure of the Invention

It is an object of the invention to provide a filter system for accommodating a cost efficient secondary filter element.

It is a further object of the invention to provide a cost efficient secondary filter element for such a filter system.

It is a further object of the invention to provide a method of manufacturing a filter element, in particular such a cost efficient secondary filter element.

The aforementioned object is achieved according to one aspect of the invention by a filter system comprising a housing, a fluid inlet formed in a housing wall, a fluid outlet formed in a housing wall, a primary filter element and a secondary filter element, both being accommodated in the housing, wherein the secondary filter element is arranged downstream the primary filter element on a frustoconical stand pipe, the stand pipe being rigidly connected to one of the housing walls, the inside of the stand pipe being in fluid connection with the fluid outlet, wherein the secondary filter element comprises a filter medium forming a frustoconical filter body having at least two longitudinal seams extending along an axial direction, and two axial end edges spaced axially apart, the first end edge having a smaller circumference than the second end edge, wherein the filter body of the secondary filter element comprises a first medium layer of the filter medium and a second medium layer of the filter medium, the medium layers being cut and joined, in particular welded, along the at least two longitudinal seams, and forming the frustoconical filter body, wherein the longitudinal seams at the second end edge have a longer extension in the axial direction than a region at the circumference between the seams.

The further object is achieved according to one aspect of the invention by a secondary filter element of a filter system, comprising a filter medium forming a frustoconical filter body with at least two longitudinal seams extending along an axial direction, two axial end edges spaced axially apart, wherein a first end edge having a smaller circumference than an axially opposing second end edge, and an end cap at its first end edge, wherein the filter body of the secondary filter element comprises a first medium layer of the filter medium and a second medium layer of the filter medium being cut and joined, in particular welded, along the at least two longitudinal seams, and wherein the first medium layer and the second medium layer have a first straight base and a second straight base in an initial, flat, unformed state of the filter medium, wherein, in a state of the layers of the filter medium forming the frustoconical filter body, the longitudinal seams at the second edge have a longer extension in the axial direction than a region at the circumference between the seams.

The further object is achieved according to one aspect of the invention by a method of manufacturing a filter element, especially a secondary filter element for an air filter system, especially a secondary filter element, comprising the first step of providing a first medium layer of a filter medium and a second medium layer of the filter medium, being arranged one upon each other, and a second step of providing a cut of the first medium layer and the second medium layer, the cut of the first medium layer and the second medium layer having a trapezoidal shape having a center line of symmetry, two parallel straight bases and two oblique legs or sides, wherein the shorter base defines a first end edge and the longer base defines a second end edge of the filter element.

Advantageous embodiments and advantages of the invention are described in the further claims, the description and the drawings.

According to a first aspect of the invention, a filter system is proposed comprising a housing, a fluid inlet formed in a housing wall, a fluid outlet formed in a housing wall, a primary filter element and a secondary filter element, both being accommodated in the housing. The secondary filter element is arranged downstream the primary filter element on a frustoconical stand pipe, the stand pipe being rigidly connected to one of the housing walls, the inside of the stand pipe being in fluid connection with the fluid outlet. The secondary filter element comprises a filter medium forming a frustoconical filter body having at least two longitudinal seams extending along an axial direction, and two axial end edges spaced axially apart, the first end edge having a smaller circumference than the second end edge. The filter body of the secondary filter element comprises a first medium layer of the filter medium and a second medium layer of the filter medium, the medium layers being cut and joined, in particular welded, along the at least two longitudinal seams, and forming the frustoconical filter body, wherein the longitudinal seams at the second end edge have a longer extension in the axial direction than a region at the circumference between the seams.

The special shape of the cut of the unformed filter medium with a straight base at one side and a straight base on the opposite side, which establish the upper and lower end edge of the filter body with regard to the axial direction in its final formed state realizes material savings and creates a specific non-circular sealing interface. Besides the cost efficient manufacturing of the secondary filter element, the specific shape of the filter body allows for a specific sealing structure at the stand pipe to which the secondary filter element is mounted in the filter system. The secondary filter element can be arranged in a unique rotational position on the stand pipe so that the position of the longitudinal seam of the secondary filter element has a well-defined and well reproducible rotational position in the housing. The presence of one or more weld seams in a filter body may influence, e.g., the air flow through the filter body and, hence, the readings of an air mass sensor. A reliable and reproducible rotational position of the seams of the filter body allows for accurate and reproducible readings of an air mass sensor.

Preferably, the cut of the filter medium can be described as having a generally trapezoidal shape. The trapezoidal shape preferably is based on an isosceles trapezoid having a center line of symmetry, two parallel straight bases and two oblique legs or sides, wherein the longer base and the shorter base result in the end edges of the frustoconical filter body. To create the frustoconical filter body, the legs or sides of the cut can be joined to form a seam, for example by gluing, welding, sewing or the like. When the conical hose of the filter body is joined the seams at the second end edge have a longer extension in the axial direction than a region at the circumference between the seams. In particular, the region at the center line of symmetry of the trapezoidal shape may have the shortest axial extension of the filter body compared to the region of the seams. The second end edge at the seams may sport a sharp apex of the filter material while the second end edge in the region of the center line of symmetry may be smoothly curved, in particular concavely curved.

Thus, the conical hose of the filter body may be made by feeding two overlapping filter medium layer roles into an ultrasonic welding machine. In a next step of the cut and join welding process, a first end of the top and bottom medium layers are joined by a first longitudinal weld joint at one longitudinal seam, followed by a second longitudinal welding to join a second end of the medium layers at a second longitudinal seam. This second longitudinal welding joint also creates a first joint of a second hose of the filter body. In this process each conical hose has two weld joints at longitudinal seams. And three cut and join welded joints create two conical hoses. This line production method further simplifies the conical hose production process by having only two weld joints by the cut and join method.

The specific shape of the second end edge of the secondary filter element and the sealing structure on the stand pipe enable a defined position of the longitudinal seams of the filter medium of the secondary filter element. As result a flow-disturbing influence of the longitudinal seams on the flow characteristics can be reduced or even eliminated. Additionally a reproducible position of the seams with respect to a mass flow sensor can be achieved in case the secondary filter element is exchanged.

Advantageously, by connecting the stand pipe rigidly with the bottom wall of the housing, the positions of the longitudinal struts along the axial direction of the stand pipe are known. By positioning the secondary filter element in a distinct rotational orientation with respect to one or more struts of the stand pipe, disturbances of the flow characteristic due to one or more longitudinal seams of the filter medium of the secondary filter element can be reduced or eliminated.

It is of advantage to position the secondary filter element on the stand pipe in a similar defined rotational position with respect to one or more struts of the stand pipe. As a result, the position of the seams, for example, of the secondary filter element on the stand pipe is known, too and can be reproduced when the secondary filter element is exchanged. Preferably, the secondary filter element may have at least two longitudinal seams. The seams can be positioned radially in front of particular struts or, alternatively, between two longitudinal struts. In a preferred air filter system for a combustion engine this allows to position the longitudinal struts of the stand pipe and the primary filter element with respect to a mass flow sensor in a way that the flow characteristics of the fluid, i.e. air, is known in the region of the mass flow sensor and the measurements of the mass flow sensor are accurate.

Moreover, a further advantage of such a filter system is the safe and stable assembly of the primary filter element and of the secondary filter element, as well as a very economical interchangeability of the primary filter element and, if appropriate, of the secondary filter element, in the event of maintenance.

According to a favorable embodiment of the filter system, a sealing structure may be arranged at the stand pipe the contour of which being complementary to the contour of the second end edge of the secondary filter element. The sealing structure and the second end edge cooperate as mutual self-positioning elements which allows to position the secondary filter element in a defined rotational position in the housing.

According to a favorable embodiment of the filter system, the sealing structure may comprise a pocket for accommodating the secondary filter element, the pocket having a bottom following the contour of the sealing structure. The pocket receives the respective end of the filter body. Due to the unique contour of the second end edge of the filter body and the sealing structure a reliable positioning of the secondary filter element is possible.

According to a favorable embodiment of the filter system, the contour of the sealing structure may comprise a maximum point and a minimum point at its outer surface, wherein a height of the minimum point is lower than a depth of the pocket at the maximum point in relation to the axial direction, preferably wherein a height of the minimum point has a shorter extension along the axial direction measured from a base line than an extension along the axial direction from the base line to the bottom of the pocket at the maximum point. Mounting the secondary filter element to the sealing structure in its proper position is facilitated.

According to a favorable embodiment of the filter system, the second end edge of the secondary filter element may be arranged close to an interface between the one of the housing walls and the stand pipe. In particular, the secondary filter element may have a conical, in particular frustoconical shape, and the second edge may be located at the broad basis of the conus form, thus facilitating mounting of the secondary filter element.

According to a favorable embodiment of the filter system, the secondary filter element may comprise an end cap at its first end edge and the secondary filter element and the stand pipe may be mutually connected at one of their top region and first end edge by connection elements. This feature ensures the stable positioning of the secondary filter element.

According to a favorable embodiment of the filter system, the primary filter element and the one of the housing walls accommodating the stand pipe and the bottom portion of the primary filter element may be configured with mutual self-positioning elements to arrange the primary filter element on the one of the housing walls accommodating the stand pipe in a defined rotational position with respect to one or more struts of the stand pipe. In particular the mutual self-positioning elements may comprise a radially extending protrusion and a guiding surface, the radially extending protrusion being configured to glide along the guiding surface on a relative rotational movement of the primary filter element and the one of the housing wall about a common rotational axis. In addition to the secondary filter element, the primary filter element can be arranged in a rotational position which is favorable for the fluid flow through the filter system. Advantageously, the radially extending protrusion may be arranged on the outside of an open end cap of the primary filter element and the guiding surface may be provided on the inside of the one of the housing walls, surrounding the stand pipe, and/or wherein the guiding surface includes a notch for accommodating the radially extending protrusion in its locked position. The mutual self-positioning elements can be arranged in a space saving manner. For instance, the radially extending protrusion may be arranged at the outer surface of a ring embedded in the end cap of the primary filter element.

According to a favorable embodiment of the filter system, the radially extending protrusion may be arranged on the outside of an open end cap of the primary filter element and the guiding surface may be provided on the inside of the one of the housing walls, surrounding the stand pipe. For instance, the radially extending protrusion may be arranged at the outer surface of a ring embedded in the end cap of the primary filter element.

According to a favorable embodiment of the filter system, the secondary filter element and the stand pipe may be configured with mutual self-positioning elements to arrange the secondary filter element on the stand pipe in a defined rotational position with respect to one or more struts of the stand pipe.

According to a favorable embodiment of the filter system, the mutual self-positioning elements may comprise a guiding surface between at least one high point and at least one low point and a projection element, wherein the guiding surface is intended to guide the projection element from an initial position to a final position at the at least one low point where the secondary filter element is in its defined rotational position with respect to the one or more struts of the stand pipe. Appropriate pairs of mutual self-positioning elements can be chosen. Additionally or alternatively, the mutual self-positioning elements may comprise a contour arranged at an exterior surface of one of the stand pipe and the secondary filter element and a counter contour at an interior surface of the other one of the stand pipe and the secondary filter element. Favorably, a polygonal contour on the stand pipe can be used for mounting the stand pipe to the bottom wall of the housing in a position oriented manner. Dual use can be made of such a contour for aligning the secondary filter element on the stand pipe, too, when an appropriate counter contour is provided on the secondary filter element.

The at least one high point and at least one low point favorably allow to align the longitudinal seams of the secondary filter element in a crown area of the stand pipe. The secondary filter element has a frustoconical shape and an end cap which may be connected by circumferential welding. During an assembly of the secondary filter element with the stand pipe, the self-positioning element of the end cap with a sliding feature will come into contact with the self-positioning element of the stand pipe with the guiding surface and when pressed further down the end cap will slip either in clockwise or anticlockwise direction. When the sliding feature of the end cap reaches low points of the stand pipe guiding feature, a snap fit assembly between the stand pipe and the end cap completes. This self-positioning feature of the secondary filter element with the sliding feature and the guiding feature with at least one high point and at least one low point improves the ease secondary filter element assembly.

According to a further aspect of the invention, a secondary filter element of a filter system is proposed, comprising a filter medium forming a frustoconical filter body with at least two longitudinal seams extending along an axial direction, two axial end edges spaced axially apart, wherein the first end edge having a smaller circumference than the second end edge, and an end cap at the first end edge. The filter body of the secondary filter element comprises a first medium layer of the filter medium and a second medium layer of the filter medium being cut and joined, in particular welded, along the at least two longitudinal seams. The first medium layer and the second medium layer initially have a first straight base and a second straight base in an initial, flat, unformed state of the filter medium, wherein, in a state of the layers of the filter medium forming the frustoconical filter body, the longitudinal seams at the second end edge have a longer extension in the axial direction than a region at the circumference between the seams.

The special cut of the filter medium of the secondary filter element allows for a reliable and reproducible mounting of the secondary filter element into a housing of the filter system.

According to a favorable embodiment of the secondary filter element, the end cap may be provided with one or more connection elements which are intended to connect the secondary filter element to a stand pipe of the filter system, and/or the end cap may be provided with a self-positioning element to arrange the secondary filter element on the stand pipe of the filter system in a defined rotational position with respect to one or more struts of the stand pipe of the filter system. The secondary filter element can be arranged stable and reliably on the stand pipe in the first case and can be mounted in a defined rotational position in the housing allowing for reducing or eliminating disturbances of the fluid flow caused by the longitudinal seam of the secondary filter element.

According to a favorable embodiment of the secondary filter element, the seams of the filter body may be oriented along a projection of the self-positioning element to the filter body. By positioning the secondary filter element in a distinct rotational orientation with respect to one or more struts of the stand pipe, disturbances of the flow characteristic due to one or more longitudinal seams of the filter medium of the secondary filter element can be reduced or eliminated.

It is of advantage to position the secondary filter element on the stand pipe in a similar defined rotational position with respect to one or more struts along the axial direction of the stand pipe. As a result, the position of the seams, for example, of the secondary filter element on the stand pipe is known, too and can be reproduced when the secondary filter element is exchanged. Preferably, the secondary filter element may have at least two longitudinal seams. The seams can be positioned radially in front of particular struts or, alternatively, between two longitudinal struts. In a preferred air filter system for a combustion engine this allows to position the longitudinal struts of the stand pipe and the primary filter element with respect to a mass flow sensor in a way that the flow characteristics of the fluid, i.e. air, is known in the region of the mass flow sensor and the measurements of the mass flow sensor are accurate.

According to a favorable embodiment of the secondary filter element, the end cap may have a pot-like shape and the self-positioning element extends into the interior of the secondary filter medium. Favorably, the self-positioning element can be guided by the end cap, thus facilitating mounting of the secondary filter element.

Advantageously, the end cap may be provided with a projection element extending in axial direction. Favorably, the axial projection element can be guided by the end cap, thus facilitating mounting of the secondary filter element.

According to a further aspect of the invention, a method of manufacturing a filter element, especially a secondary filter element for an air filter system, is proposed, comprising a first step of providing a first medium layer of a filter medium and a second medium layer of the filter medium, being arranged one upon each other, and a second step of providing a cut of the first medium layer and the second medium layer, the cut of the first medium layer and the second medium layer having a trapezoidal shape having a center line of symmetry, two parallel straight bases and two oblique legs or sides, wherein the shorter base defines a first end edge and the longer base defines a second end edge of the filter element.

The special shape of the cut of the unformed filter medium with a straight edge at one side and a straight edge on the opposite side, which establish the upper and lower end of the filter body in its final formed state realizes material savings and creates a specific non-circular sealing interface. Besides the cost efficient manufacturing of the secondary filter element, the specific shape of the filter body allows for a specific sealing structure at the stand pipe to which the secondary filter element is mounted in the filter system. The secondary filter element can be arranged in a unique rotational position on the stand pipe so that the position of the longitudinal seam of the secondary filter element has a well-defined rotational position in the housing.

Preferably, the cut of the filter medium can be described as having a generally trapezoidal shape. The trapezoidal shape preferably is based on an isosceles trapezoid having a center line of symmetry, two parallel straight bases and two oblique legs or sides, wherein the shorter base and the longer base define end edges of the filter body. To create a frustoconical filter body, the legs or sides of the cut can be joined with a seam, for example by gluing, welding, sewing or the like. When the conical hose of the filter body is joined the first end edge shows a V-like region at the seams and a smoothly curved region between the seams, and the second end edge shows a sharp apex at the seams and a smoothly curved region in between the seams.

Advantageously, the frustoconical shape of the filter body may be made by feeding two overlapping filter medium layer roles into an ultrasonic welding machine. In a next step of the cut and join welding process, a first end of the top and bottom medium layers are joined by a first longitudinal weld joint at one longitudinal seam, followed by a second longitudinal welding to join a second end of the medium layers at a second longitudinal seam. This second longitudinal welding joint also creates a first joint of a second hose of the filter body. In this process each frustoconical body has two weld joints at longitudinal seams. And three cut and join welded joints create two conical hoses. This line production method, further simplifies the conical hose production process by having only two weld joints by the cut and join method.

Advantageously, the inventive filter system and secondary filter element can be used as an air filter, in particular as an air filter of an internal combustion engine. The safe operation of internal combustion engines is also based on safe and favorable filtering of the intake air for combustion operation, in particular with an undisturbed flow characteristic of the air at the mass flow sensor. The described filter system represents an economic and reliable possibility for this purpose. The use of the filter system as a particle filter, in particular as a particle filter of an internal combustion engine, is also advantageous. Again, the secure assembly and economic interchangeability of the described filter elements is of advantage. Conveniently, the secondary filter element may remain in the housing when the primary filter element is changed. This ensures that the clean side of the filter system is also effectively protected against penetrating dirt particles during maintenance of the filter system.

According to a favorable embodiment of the method, a frustoconical filter body may be created in the second step by joining the legs or sides of the cut in the second step, in particular with a seam, in particular by gluing, welding, sewing or the like. This line production method, further simplifies the conical hose production process by having only two weld joints by the cut and join method.

According to a favorable embodiment of the method, the first medium layer and the second medium layer may be cut and joined at the same time, in particular by welding at the legs or sides, creating the frustoconical filter body. This line production method, further simplifies the conical hose production process by having only two weld joints by the cut and join method.

According to a favorable embodiment of the method, at least one end cap may be provided at at least one axial end edge of the frustoconical filter body. The end cap may enable a stable and unambiguous positioning of the filter body on the stand pipe ensuring a proper orientation of the longitudinal seams for reliable operation of the filter system.

### Brief Description of the Drawings

Further advantages result from the following drawing description. Embodiments of the invention are shown in the drawings. The drawings, the description, and the claims contain numerous features in combination. The person skilled in the art will expediently also consider the features individually and combine them into sensible further combinations. For example,
- Fig. 1: shows a longitudinal cut view of a filter system according to an embodiment of the invention;
- Fig. 2: shows the filter system of Fig. 1 in an exploded view;
- Fig. 3: shows a longitudinal sectional view of a first medium layer of a filter medium and a second medium layer of the filter medium being arranged one upon each other, being cut and joined along two longitudinal seams according to an embodiment of the invention;
- Fig. 4: shows a cut of the filter medium in an initial unformed state exhibiting a first straight base and a second straight base, indicating a saved area of filter medium;
- Fig. 5: shows the filter medium of Fig. 4 in a final formed state formed to a conical filter body exhibiting the first end edge showing a V-shaped notch at seams of the filter medium and being curved between the seams and a second end edge showing a sharp apex at the seams and being smoothly curved between the seams, with a sectional plane C-C marked;
- Fig. 6: shows the filter medium of Fig. 5 in the sectional view C-C, formed to a conical filter body exhibiting the first end edge showing a V-shaped notch at seams of the filter medium and being curved between the seams and a second end edge showing a sharp apex at the seams and being smoothly curved between the seams;
- Fig. 7: shows an integrated center pipe of the filter system according to Fig. 1 comprising a support structure and a stand pipe, with a sectional plane G-G marked;
- Fig. 8: shows the integrated center pipe of Fig. 7 in the sectional view G-G;
- Fig. 9: shows the integrated center pipe of Fig. 7 in an isometric view;
- Fig. 10: shows a detailed isometric view of an end cap of the secondary filter element from an inside;
- Fig. 11: shows a detailed isometric view of the end cap of Fig. 10 from an outside;
- Fig. 12: shows a top view of the end cap of Fig. 10, with sectional planes A-A and B-B marked;
- Fig. 13: shows a filter body of the secondary filter element with an end cap according to an embodiment of the invention, in the sectional view A-A;
- Fig. 14: shows the filter body of Fig. 13 in the sectional view B-B;
- Fig. 15: shows a top view of the integrated center pipe of Fig. 7 with a secondary filter element mounted, with a sectional plane H-H marked;
- Fig. 16: shows the integrated center pipe of Fig. 15 with the secondary filter element mounted in the sectional view H-H, with a sectional plane J-J marked;
- Fig. 17: shows the integrated center pipe of Fig. 15 with the secondary filter element mounted in the sectional view J-J, with detailed views Y and Z marked;
- Fig. 18: shows a detailed view Z of the integrated center pipe of Fig. 17 with the secondary filter element mounted; and
- Fig. 19: shows a detailed view Y of the integrated center pipe of Fig. 17 with the secondary filter element mounted.

### Detailed Description of the Drawings

The figures show merely examples and are not intended to be limiting. Similar or equal elements are referred to with same reference numerals in the Figures.

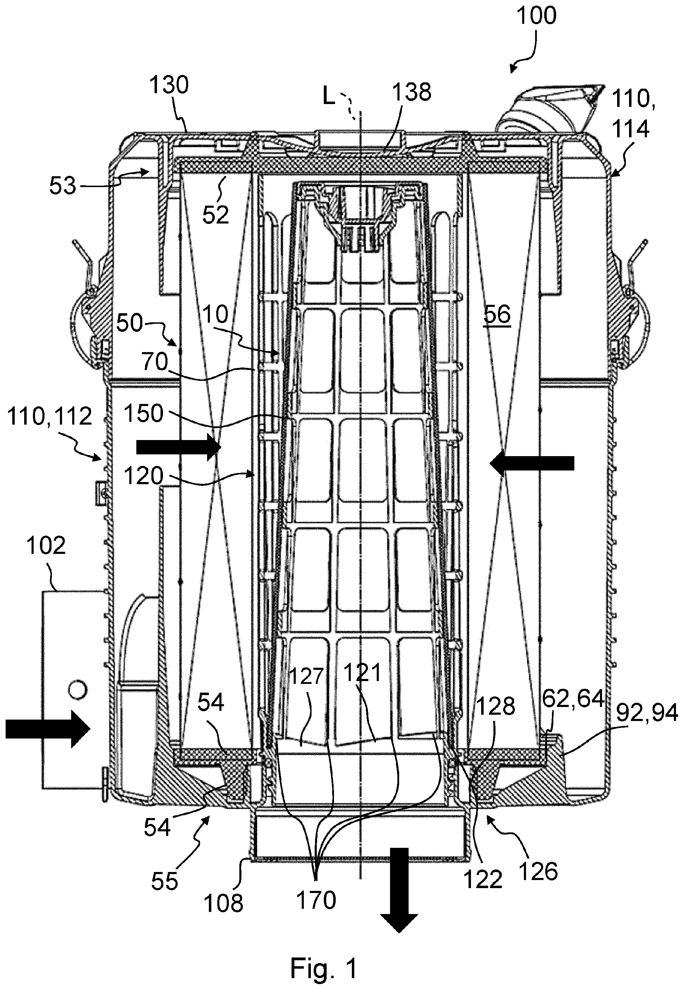

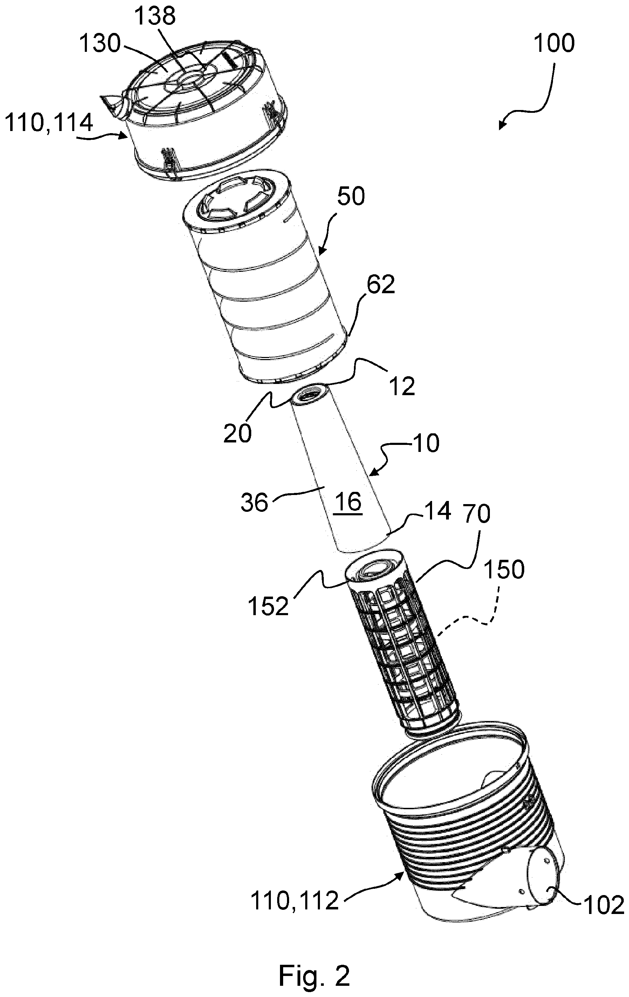

Figure 1 shows a longitudinal cut view of a filter system 100 according to an embodiment of the invention. Figure 2 shows the filter system 100 of Figure 1 in an exploded view.

The filter system 100 comprises a housing 110, a fluid inlet 102 formed in a housing wall 112, a fluid outlet 108 formed in a housing wall 112, a primary filter element 50 and a secondary filter element 10, both being accommodated in the housing 110.

In this embodiment, the housing 110 may consist of two segments, the bottom housing wall 112 with the fluid inlet 102 and the fluid outlet 108 and a cover part 114. The segments are connected to each other by, e.g., clamps, screws or the like. A hollow cylindrical primary filter element 50 is accommodated in the housing 110. For removing the primary filter element 50 for maintenance or exchange the cover part 114 can be removed from the bottom housing wall 112.

The body of the primary filter element 50 is made of a filter medium 56 which may be pleated, for instance. The primary filter element 50 is covered at both ends by ring shaped first and second end caps 52, 54, which are made, for example, from polyurethane which is well known in the prior art. Sealing structures and supporting ribs are arranged at the exterior sides of the first end cap 52 and the second end cap 54. The primary filter element 50 is clamped between the bottom housing wall 112 and the cover part 114 in a sealing tight manner so that a fluid has to pass through the primary filter element 50 in a radial direction, which is indicated by bold arrows in Figure 1. The second end cap 54 of the primary filter element 50 is configured to have a feedthrough for the stand pipe 150 and is accommodated in the bottom housing wall 112 which is provided with a groove 126. For radial fixation of the primary filter element 50, a ring shaped projection 128 is arranged in the groove 126.

In its front face 130, the cover part 114 is provided with a recess 138 which extends into the interior of the housing 110 for fixing the primary filter element 50.

Inside the primary filter element 50, a secondary filter element 10 is arranged. The primary and secondary filter elements 50, 10 are arranged concentrically about an axis extending in an axial direction L. The secondary filter element 10 is arranged downstream the primary filter element 50 so that fluid has to pass through the secondary filter element 10 on its way to the fluid outlet 108. The secondary filter element 10 is arranged on a frustoconical stand pipe 150 which is rigidly connected to the bottom housing wall 112. The lower part of the stand pipe 150 merges with the fluid outlet 108 of the bottom housing wall 112. The secondary filter element 10 comprises a filter medium 16 forming a frustoconical filter body 36 with at least two longitudinal seams 18, 19 along the axial direction L.

The secondary filter element 10 further comprises two axial end edges 12, 14 spaced axially apart, wherein the first end edge 12 has a smaller circumference then the second end edge 14. In this example embodiment, the first end edge 12 is the top of the secondary filter element 10 and the second end edge is the bottom of the secondary filter element 10.

Optionally, the secondary filter element 10 comprises a closed end cap 20 at its first end edge 12. The secondary filter element 10 and the stand pipe 150 are mutually connected at the top region 152 and first end edge 12 by connection elements 22, 156. The open ended side at the second end edge 14 of the secondary filter element 10 is accommodated in a circular groove 122 in the bottom wall 120.

The second end edge 14 of the secondary filter element 10 is arranged close to an interface between the one of the housing walls 112 and the stand pipe 150.

The bottom region 55 of the primary filter element 50 and the housing wall 120 accommodating the stand pipe 150 are configured with mutual self-positioning elements 62, 92 to arrange the primary filter element 50 on the housing wall 120 in a defined rotational position with respect to one or more struts 170 of the stand pipe 150. The struts 170 are arranged about the longitudinal axis L and are pointing to the interior of the stand pipe 150.

In particular, a radially extending protrusion 64 is arranged at the bottom part 55 of the primary filter element 50 as self-positioning element 62. A guiding surface 94 is arranged around the stand pipe 150 as self-positioning element 92. The guiding surface 94 is formed as a ramp which has a maximum region with a maximum height in relation to the longitudinal axis L and a minimum region with a minimum height in relation to the axial direction L at the opposite side of the stand pipe 150. The radially extending protrusion 64 can glide on the guiding surface 94 from the maximum region to the minimum region when the primary filter element 50 and/or the bottom housing wall 120 are rotated about the axial direction L.

The primary filter element 50 comprises a radially extending protrusion 64 at the outer circumference of the second end cap 54. The radially protruding element 64 can be arranged for accommodating the filter medium 56 of the primary filter element 10 comprising a radially extending protrusion 64 at the outer circumference of its second end cap 54. The primary filter element 50 has a filter body consisting of a filter medium 56 which extends between a first end cap 52 and a second end cap 54 which has a feedthrough for the stand pipe 150. The filter medium 56 is attached to the outer surface of a support structure 70 arranged in the interior of the primary filter element 50. A self-positioning element 62 configured as a radially extending protrusion 64 is arranged at the second end cap 54. The radially extending protrusion 64 is part of a ring which is embedded in the material of the second end cap 54. The ring accommodates the filter body consisting of the filter medium 56 in its interior. The ring has an outer rim which overlaps the bottom part of the filter body in axial direction.

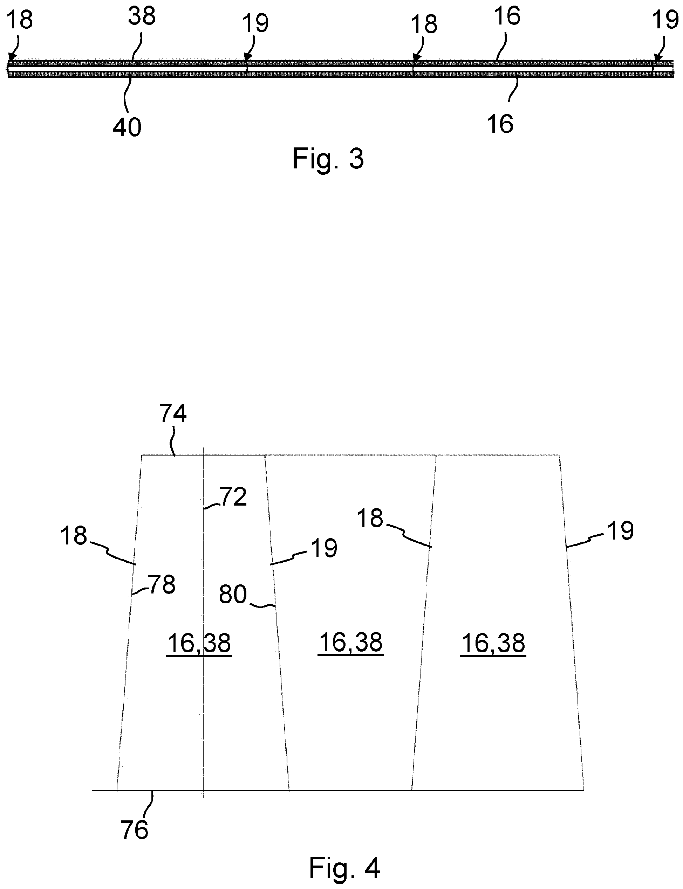

Figures 3 to 6 show a filter medium 16 and a conical secondary filter element 10 made from the filter medium 16 according to an example embodiment of the invention. Figure 3 shows a longitudinal sectional view of a first medium layer 38 of a filter medium 16 and a second medium layer 40 of the filter medium 16 being arranged one upon each other, being cut and joined along two longitudinal seams 18, 19 according to an embodiment of the invention. Figure 4 shows a cut of the filter medium 16 in an initial flat and unformed state exhibiting a first base 74 and a second base 76 which are straight in this unformed state.

The filter body 36 of the secondary filter element 10 comprises the first medium layer 38 of the filter medium 16 and the second medium layer 40 of the filter medium 16 being cut and joined, in particular welded, along the at least two longitudinal seams 18, 19.

Manufacturing the secondary filter element 10 comprises a first step of providing the first medium layer 38 of the filter medium 16 and the second medium layer 40 of the filter medium 16, being arranged one upon each other, as shown in Figure 3, and a second step of providing a cut of the first medium layer 38 and the second medium layer 40. The cut of the first medium layer 38 and the second medium layer 40 has a trapezoidal shape having a symmetry center line 72, the two parallel straight bases 74, 76 and two oblique legs or sides 78, 80, as shown in Figure 4. The advantageous cut of the filter medium 16 in Figure 4 can be described as having a generally trapezoidal shape. The trapezoidal shape preferably is based on an isosceles trapezoid having the center line of symmetry 72.

The longer base 76 defines a second end edge 14 at one axial end and the shorter base 74 defines a first end edge 12 at the opposite axial end of the secondary filter element 10.

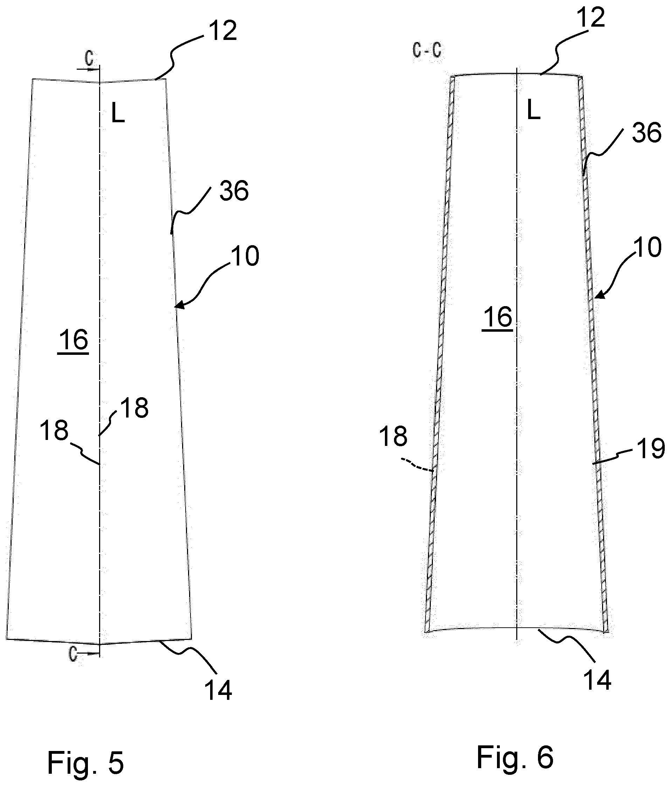

Figure 5 shows a longitudinal cut through the secondary filter element 10 in its final formed state forming a conical filter body 36.

The first end edge 12 has V-shaped notches at the seams 18, 19 and is smoothly curved between the seams 18, 19. In Figure 5 only the seams 18 are visible, because in this view the seams 19 are on the back side of the filter body 36. With respect to the axial direction L the V-shaped notch is a minimum of the first edge 12. The second end edge 14 has sharp apexes at the seams 18, 19 and is smoothly curved between the seams 18, 19. With respect to the axial direction L the sharp apex is a maximum of the second edge 14. The longitudinal seams 18, 19 at the second end edge 14 have a longer extension in the axial direction L than a region at the circumference of the secondary filter element 10 between the seams 18, 19.

In Figure 5, a sectional plane C-C is marked. Figure 6 shows the filter medium 16 of Figure 5 in the sectional view C-C, formed to the conical filter body 36.

The frustoconical filter body 36 is created in the second step by connecting the legs or sides 78, 80 of the cut, in particular with a seam 18, 19, in particular by gluing, welding, sewing or the like.

Advantageously, the first medium layer 38 and the second medium layer 40 may be cut and joined at the same time, in particular by welding at the legs or sides 78, 80, thus creating the frustoconical filter body 36.

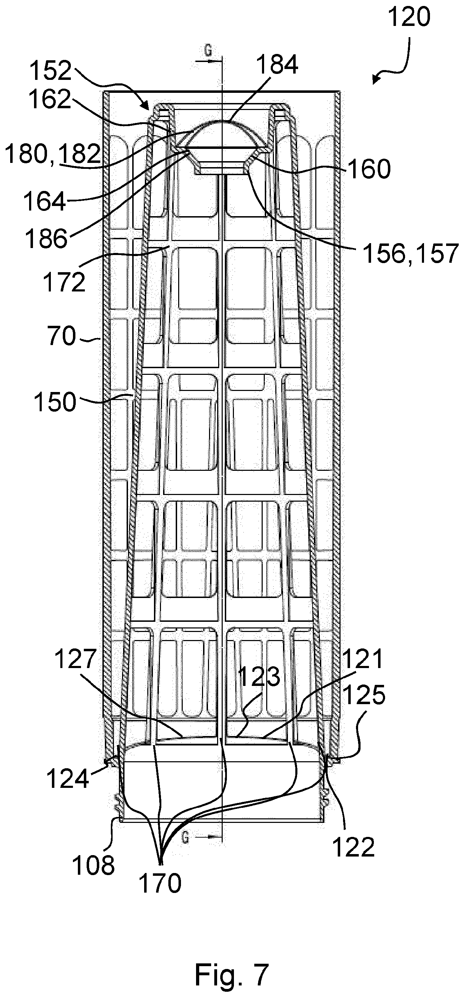

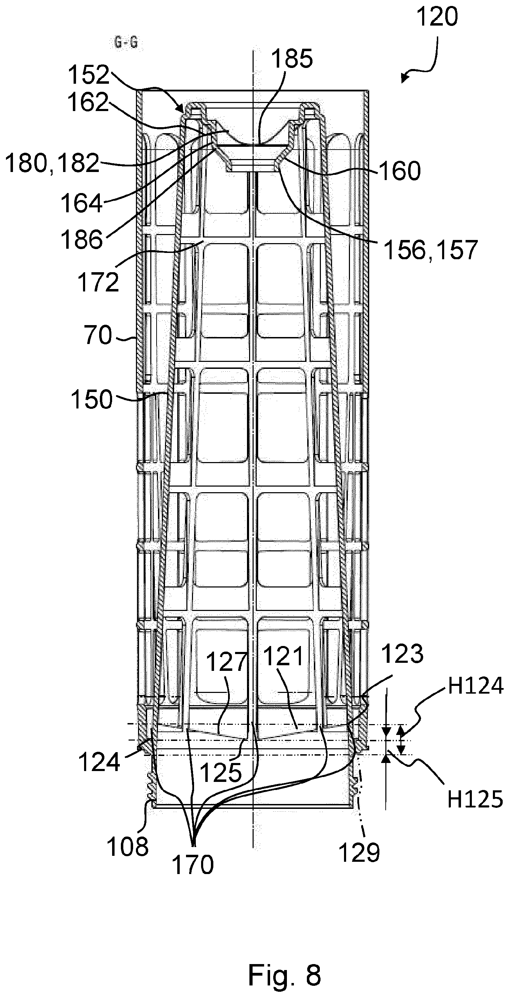

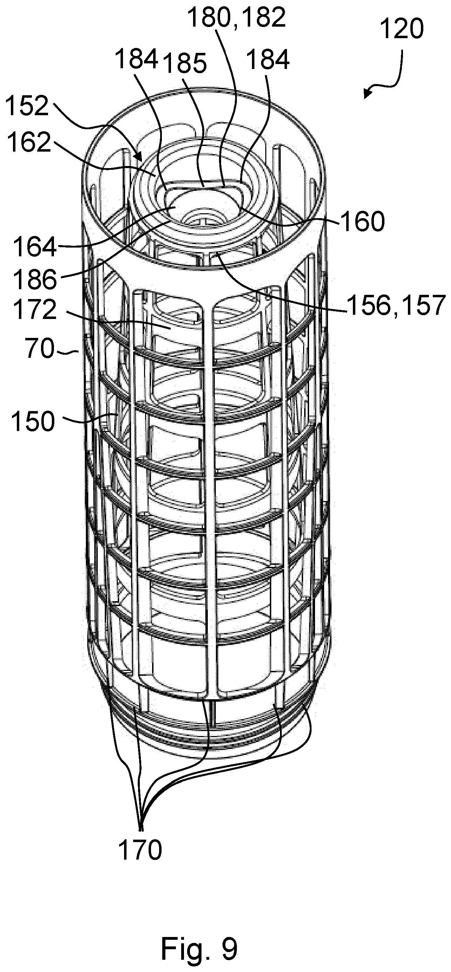

Figure 7 shows an integrated center pipe 120 of the filter system 100 according to Figure 1 comprising a support structure 70 and a stand pipe 150, with a sectional plane G-G marked. Figure 8 shows the integrated center pipe 120 of Figure 7 in the sectional view G-G, whereas in Figure 9 the integrated center pipe 120 of Figure 7 is depicted in an isometric view.

In the embodiment shown the support structure 70 for accommodating the filter medium 56 of the primary filter element 50 and the stand pipe 150 for accommodating the filter body 36 of the secondary filter element 10 are formed as an integral part.

The lattice-like body of the stand pipe 150 is conically shaped and composed of longitudinal struts 170 and circumferential struts 172. A circular groove 122 is provided for receiving the open-ended side at the second end edge 14 of the secondary filter element 10 (Figures 5 and 6). The open-ended sides at the second end edge 14 of the secondary filter element 10 as shown in Figures 5 and 6 comprise an edge 15 which has a curved contour.

The primary filter element 50 is intended to be clamped between the bottom housing wall 112 and a cover part 114 (Figure 1) in a sealing tight manner so that a fluid has to pass through the primary filter element 50 in a radial direction. The second end cap 54 of the primary filter element 50 is configured to have a feedthrough for the stand pipe 150 and is accommodated in a groove 126 of the bottom housing wall 112. For radial fixation of the primary filter element 50, a ring shaped projection 128 is arranged in the groove 126.

A sealing structure 127 for sealing the secondary filter element 10 is arranged about the stand pipe 150 close to the interface between stand pipe 150 and housing wall 112. The sealing structure 127 comprises a pocket 122 for accommodating the secondary filter element 10. The pocket 121 comprises a bottom 124 following the contour 121 of the sealing structure 127. The contour 121 of the sealing structure 127 declines from a maximum point 123 at one side of the stand pipe 150 to a minimum point 125 at the opposite side of the stand pipe 150 in a continuous manner.

As is to be seen in Figure 8, a height H125 of the minimum point 125 is lower than the bottom 124 of the pocket 122 at the maximum point 123 in relation to the longitudinal axis, i.e. the height H125 of the minimum point 125 has a shorter extension along the longitudinal axis L measured from a base line 129 than an extension along the longitudinal axis L from the base line 129 to the bottom 124 of the pocket 122 at the maximum point 123. The base line 129 is in particular arranged perpendicular to the longitudinal axis L.

This decline of the contour of the sealing structure 127 causes a big enough height difference between the maximum point 123 and the minimum point 125 so that the secondary filter element 10 can be inserted in the pocket 122 with its edge 15 in a suitably oriented and non-interchangeable manner.

The bottom housing wall 120 and the primary filter element 50 cooperate via self-positioning elements 92 and 62 (see Figure 1), according to an embodiment of the invention and which can be readily combined with the inventive secondary filter element 10.

The interior of the stand pipe 150 is in fluid connection with the fluid outlet 108. The stand pipe 150 is surrounded by a self-positioning element 92 being configured as guiding surface 94 having the shape of a ring ramp. The guiding surface 94 is formed as a ramp which has a maximum region with a maximum height in relation to the longitudinal axis L and a minimum region with a minimum height in relation to the longitudinal axis L at the opposite side of the stand pipe 150. A self-positioning element 62 configured as a radially extending protrusion 64 can glide on the guiding surface 94 from the maximum region to the minimum region when the primary filter element 50 and/or the bottom housing wall 112 are rotated about the longitudinal axis L. The radially extending protrusion 64 is arranged on the outside of an open end cap 54 of the primary filter element 50 and the guiding surface 94 is provided on the inside of the one of the housing walls 112, surrounding the stand pipe 150.

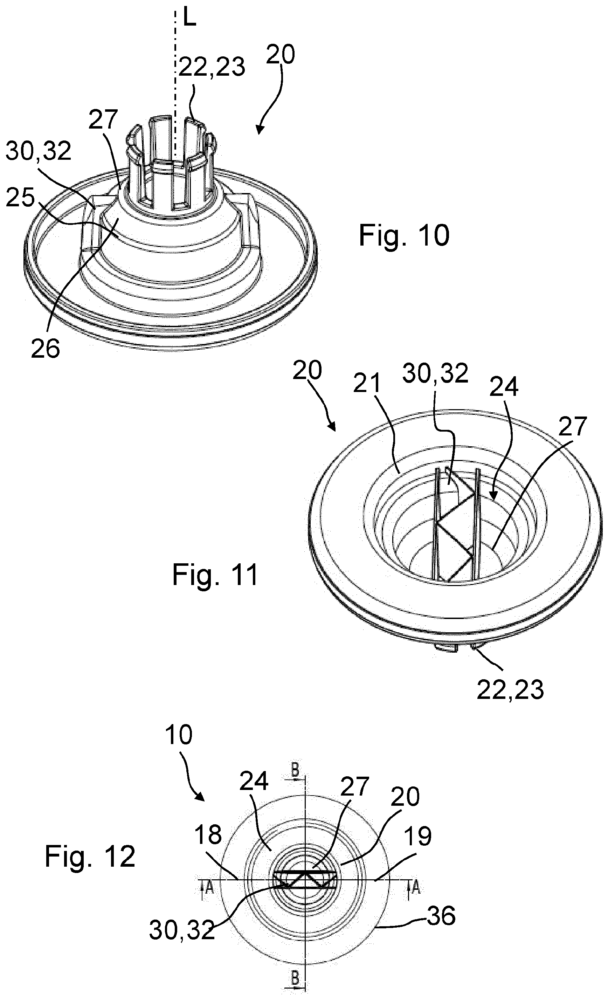

Figure 10 shows a detailed isometric view of an end cap 20 of the secondary filter element 10 from an inside, whereas in Figure 11 a detailed isometric view of the end cap 20 of Figure 10 is depicted from an outside. Figure 12 shows a top view of the end cap 20 of Figure 10, with sectional planes A-A and B-B marked.

At least one end cap 20 is provided at at least one axial end edge 12, 14 of the frustoconical filter body 36. The end cap 20 has a pot-like shape and the self-positioning element 30 extends into the interior of the secondary filter medium 16. The end cap 20 is provided with a projection element 32 extending in axial direction L.

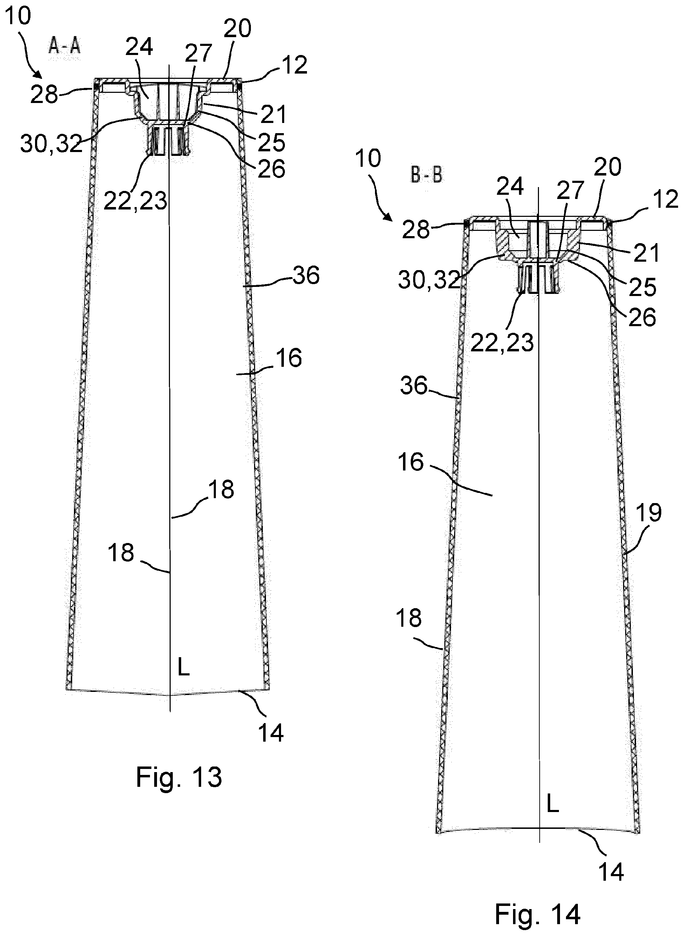

Figure 13 shows a filter body 36 of the secondary filter element 10 with an end cap 20 according to an embodiment of the invention, in the sectional view A-A, whereas in Figure 14 the filter body 36 of Figure 13 is depicted in the sectional view B-B.

As may be seen from Figure 13, the longitudinal seams 18, 19 of the filter body 36 are oriented along a projection of the self-positioning element 30 to the filter body 36.

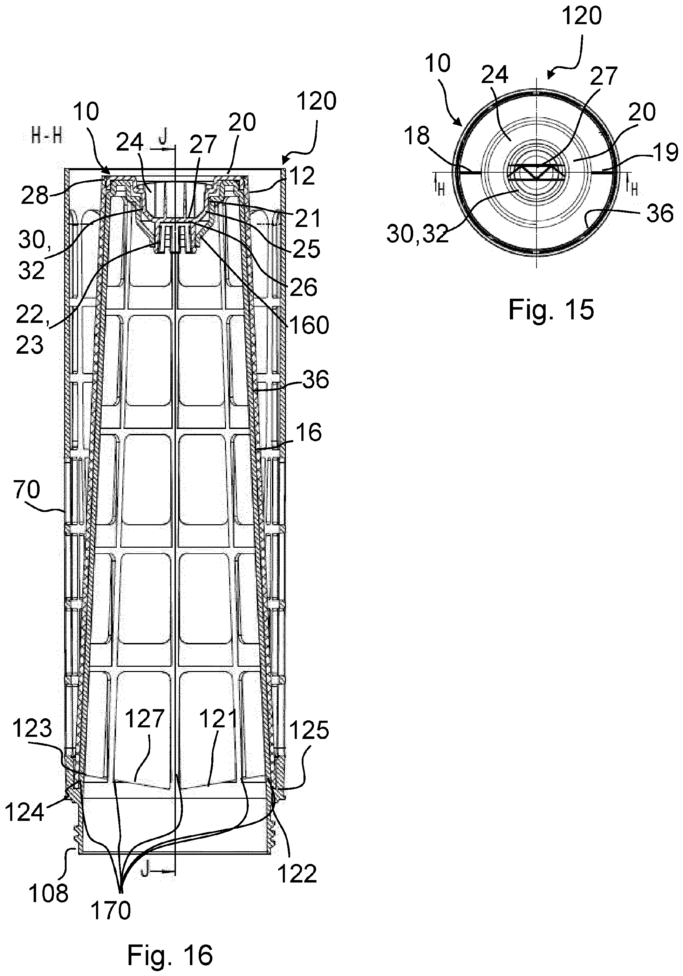

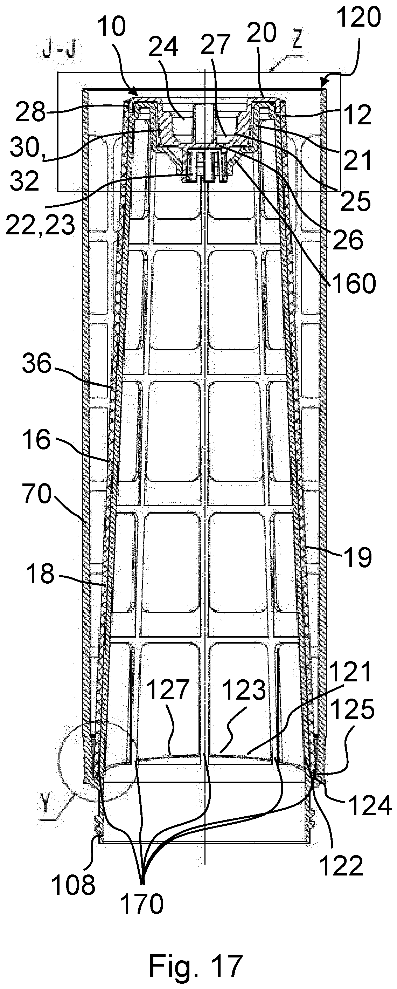

Figure 15 shows a top view of the integrated center pipe 120 of Figure 7 with a secondary filter element 10 mounted, with a sectional plane H-H marked. Figure 16 shows the integrated center pipe 120 of Figure 15 with the secondary filter element 10 mounted in the sectional view H-H, with a sectional plane J-J marked, whereas Figure 17 shows the integrated center pipe 120 of Figure 15 with the secondary filter element 10 mounted in the sectional view J-J, with detailed views Y and Z marked.

Figures 16 and 17 show a detail of an embodiment of a secondary filter element 10 which is mounted to a stand pipe 150 before the secondary filter element 10 is put in its final position. To mount the secondary filter element 10 onto the stand pipe 150, the body 36 of the secondary filter element 10 is put over and moved along the stand pipe 150 until the end cap 20 comes close the receptacle 160 of the stand pipe 150.

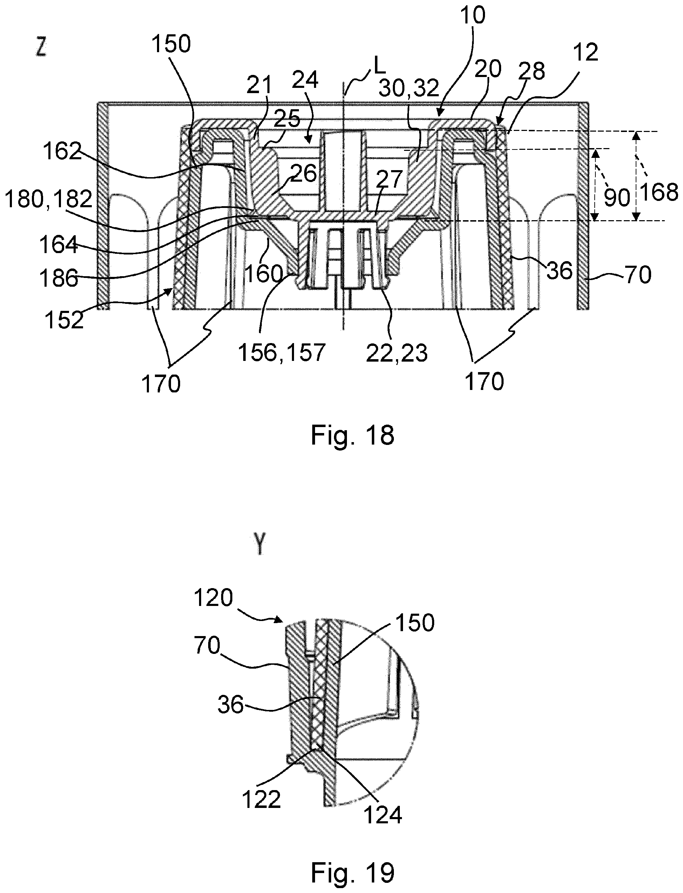

Figure 18 shows a detailed view Z of the integrated center pipe 120 of Figure 17 with the secondary filter element 10 mounted; and Figure 19 shows a detailed view Y of the integrated center pipe 120 of Figure 17 with the secondary filter element 10 mounted.

The secondary filter element 10 and the stand pipe 150 are configured with mutual self-positioning elements 30, 180 to arrange the secondary filter element 10 on the stand pipe 150 in a defined rotational position with respect to one or more struts 170 of the stand pipe 150.

The mutual self-positioning elements 30, 180 of the secondary filter element 10 and the stand pipe 150 comprise a guiding surface 182 between at least one high point 184 and at least one low point 185 and a projection element 32. The guiding surface 182 is intended to guide the projection element 32 from an initial position to a final position at the at least one low point 185 where the secondary filter element 10 is in its defined rotational position with respect to the one or more struts 170 of the stand pipe 150.

Optionally, the mutual self-positioning elements 30, 180 may comprise a contour arranged at an exterior surface of one of the stand pipe 150 and the secondary filter element 10 and a counter contour at an interior surface of the other one of the stand pipe 150 and the secondary filter element 10.

At its upper first end edge 12 the secondary filter element 10 is provided with an end cap 20, the end cap 20 having a recess 24 at its exterior side. The stand pipe 150 in this embodiment comprises a receptacle 160 at its top region 152. The contour of the receptacle 160 corresponds to the exterior contour of the end cap 20 of the secondary filter element 10.

As is shown in Figure 18, the receptacle 160 has an open ended bottom which ends in a connection element 156 for the connection elements 22 of the secondary filter element 10. For instance, snap beams 23 can be hooked on the bottom of the receptacle 160 as locking element and establish a snap fit connection between the stand pipe 150 and the secondary filter element 10. The receptacle 160 is funnel shaped in its bottom region so that introducing the snap beams is facilitated.

The end cap 20 enters the receptacle 160 towards the funnel-shaped bottom region of the receptacle 160 with the snap beams 23 first. The end cap 20 can be introduced into the receptacle 160 until the projection element 32 hits the guiding surface 182. The longitudinal extension 90 of the projection element 32 is smaller than the depth 168 of the top segment 162 of the receptacle 160. Thus, the upper segment 21 of the end cap can be immersed partly into the top segment 162 so that the step 25 is safely inside the receptacle 160. As a result, the end cap 20 can be guided further into the receptacle 160 safely without tilting.

As can be seen in Figures 7 to 9, the guiding surface 182 has two high points 184 in the bottom segment 164 of the receptacle 160 and is inclined on both sides of high points 184 to low points 185. The high points 184 of the guiding surface 182 are at the interface between the top segment 162 and the bottom segment 164 of the receptacle 160. By turning the end cap 20 in either direction about the longitudinal axis L the end cap 20 moves further into the receptacle 160 because the projection element 32 is guided on the guiding surface 182 until the projection element 32 reaches the pocket 186 in the guiding surface 182.

The end cap 20 now is moved axially until the projection element 32 is accommodated in the pocket 186. As the snap beams 23 move axially downward, too, they can snap over the rim of the funnel shaped bottom segment 164. The rim is the locking element 157 of the stand pipe 150. The snap beams 23 lock the end cap 20 safely to the stand pipe 150. The end cap 20 may be removed from the stand pipe 150 by an opposite sequence of movement by pulling and turning the end cap 20.

For turning the end cap 20, a tool such as a handle or the like can be applied to the recess 24 of the end cap 20.

With the projection element 32 accommodated in the pocket 186, the secondary filter element 10 is positioned accurately in a well-defined rotational position with respect to the stand pipe 150. Hence, the longitudinal weld seam (not shown) is in a distinct position with respect to the longitudinal struts 170 of the stand pipe 150 and, consequently, to a mass flow sensor arranged at a fixed position close to the filter elements. Preferably, the hooks at the snap beams 23 are provided with inclined surfaces so that these can come loose when some force is applied to the end cap 20.

The length of the end cap 20 with snap beams 23 is matched to the depth of the receptacle 160 so that the snap beams 23 come into contact with the rim, i.e. the locking element 157, of the funnel shaped end of the receptacle 160 with the projection element 32 reaching its end position in the pocket 186. The step 25 of the end cap 20 rests on the high points 184 of the guiding surface 182 in the receptacle 160.

In Figure 19 the special geometry for sealing the filter body 36 is depicted. The filter medium 16 of the filter body 36 is accommodated in the pocket 122 which is created by the groove between the stand pipe 150 and the support structure 70 of the integrated center pipe 120.

### Reference Numerals

- 10: secondary filter element
- 12: first axial end edge
- 14: second axial end edge
- 16: filter medium
- 18: longitudinal seam
- 19: longitudinal seam
- 20: end cap
- 21: upper segment
- 22: connection elements
- 23: snap beams
- 24: recess
- 25: step
- 26: bottom segment
- 27: bottom
- 28: circumferential weld seam
- 30: self-positioning element
- 32: projection element
- 36: body
- 38: first medium layer
- 40: second medium layer
- 50: primary element
- 52: end cap
- 53: top region
- 54: end cap
- 55: bottom region
- 56: filter medium
- 62: self-positioning element
- 64: radially extending protrusion
- 70: support structure
- 72: center line
- 74: base
- 76: base
- 78: side
- 80: side
- 90: longitudinal extension
- 92: self-positioning element
- 94: guiding surface
- 100: filter system
- 102: fluid inlet
- 108: fluid outlet
- 110: housing
- 112: housing wall
- 114: cover part
- 120: integrated center pipe
- 121: contour
- 122: pocket
- 123: maximum high point
- 124: bottom of pocket
- 125: minimum high point
- 126: groove
- 127: sealing structure
- 128: ring-shaped projection
- 129: base line
- 130: front face
- 138: recess
- 150: stand pipe
- 152: top region pipe
- 156: connection element
- 157: locking element
- 160: receptacle
- 162: top segment receptacle
- 164: bottom segment receptacle
- 168: depth
- 170: longitudinal strut
- 172: circumferential strut
- 180: self-positioning element
- 182: guiding surface
- 184: high point
- 185: low point
- 186: pocket
- L: axial direction
- H124: first height
- H125: second height

## Claims

1. A filter system (100) comprising a housing (110), a fluid inlet (102) formed in a housing wall (112), a fluid outlet (108) formed in a housing wall (112), a primary filter element (50) and a secondary filter element (10), both being accommodated in the housing (110),
wherein the secondary filter element (10) is arranged downstream the primary filter element (50) on a frustoconical stand pipe (150), the stand pipe (150) being rigidly connected to one of the housing walls (112), the inside of the stand pipe (150) being in fluid connection with the fluid outlet (108),
wherein the secondary filter element (10) comprises a filter medium (16) forming a frustoconical filter body (36) having at least two longitudinal seams (18, 19) extending along an axial direction (L), and two axial end edges (12, 14) spaced axially apart, the first end edge (12) having a smaller circumference than the second end edge (14),
wherein the filter body (36) of the secondary filter element (10) comprises a first medium layer (38) of the filter medium (16) and a second medium layer (40) of the filter medium (16), the medium layers (38, 40) being cut and joined, in particular welded, along the at least two longitudinal seams (18, 19), and forming the frustoconical filter body (36),
wherein the longitudinal seams (18, 19) at the second end edge (14) have a longer extension in the axial direction (L) than a region at the circumference between the seams (18, 19).

2. The filter system according to claim 1, wherein a sealing structure (127) is arranged at the stand pipe (150) the contour (121) of which being complementary to the contour of the second end edge (14) of the secondary filter element (10).

3. The filter system according to claim 2, wherein the sealing structure (127) comprises a pocket (122) for accommodating the secondary filter element (10), the pocket (122) having a bottom (124) following the contour (121) of the sealing structure (127).

4. The filter system according to claim 3, wherein the contour (121) of the sealing structure (127) comprises a maximum point (123) and a minimum point (125), wherein a height (H125) of the minimum point (125) is lower than a depth (124) of the pocket (122) at the maximum point (123) in relation to the axial direction (L), preferably wherein a height (H125) of the minimum point (125) has a shorter extension along the axial direction (L) measured from a base line (129) than an extension along the axial direction (L) from the base line (129) to the bottom (124) of the pocket (122) at the maximum point (123).

5. The filter system according to anyone of the preceding claims, wherein the second end edge (14) of the secondary filter element (10) is arranged close to an interface between the one of the housing walls (112) and the stand pipe (150), and/or
wherein the secondary filter element (10) comprises an end cap (20) at its first end edge (12) and wherein the secondary filter element (10) and the stand pipe (150) are mutually connected at one of their top region (152) and first end edge (12, 152) by connection elements (22, 156).

6. The filter system according to anyone of the preceding claims, wherein the primary filter element (50) and the one of the housing walls (112) accommodating the stand pipe (150) and the bottom portion (55) of the primary filter element (50) are configured with mutual self-positioning elements (92, 62) to arrange the primary filter element (50) on the one of the housing walls (112) accommodating the stand pipe (150) in a defined rotational position with respect to one or more struts (170) of the stand pipe (150), in particular wherein the mutual self-positioning elements (92, 62) comprise a radially extending protrusion (64) and a guiding surface (94), the radially extending protrusion (64) being configured to glide along the guiding surface (94) on a relative rotational movement of the primary filter element (50) and the one of the housing wall (112) about a common rotational axis, and wherein optionally the radially extending protrusion (64) is arranged on the outside of an open end cap (54) of the primary filter element (50) and the guiding surface (94) is provided on the inside of the one of the housing walls (112), surrounding the stand pipe (150).

7. The filter system according to any one of the preceding claims, wherein the secondary filter element (10) and the stand pipe (150) are configured with mutual self-positioning elements (30, 180) to arrange the secondary filter element (10) on the stand pipe (150) in a defined rotational position with respect to one or more struts (170) of the stand pipe (150).

8. The filter system according to claim 7, wherein the mutual self-positioning elements (30, 180) of the secondary filter element (10) and the stand pipe (150) comprise a guiding surface (182) between at least one high point (184) and at least one low point (185) and a projection element (32), wherein the guiding surface (182) is intended to guide the projection element (32) from an initial position to a final position at the at least one low point (185) where the secondary filter element (10) is in its defined rotational position with respect to the one or more struts (170) of the stand pipe (150), and/or wherein the mutual self-positioning elements (30, 180) comprise a contour arranged at an exterior surface of one of the stand pipe (150) and the secondary filter element (10) and a counter contour at an interior surface of the other one of the stand pipe (150) and the secondary filter element (10).

9. A secondary filter element (10) of a filter system (100) according to anyone of the preceding claims, comprising a filter medium (16) forming a frustoconical filter body (36) with at least two longitudinal seams (18, 19) extending along an axial direction (L), two axial end edges (12, 14) spaced axially apart, wherein the first end edge (12) having a smaller circumference than the second end edge (14), and an end cap (20) at its first end edge (12),
wherein the filter body (36) of the secondary filter element (10) comprises a first medium layer (38) of the filter medium (16) and a second medium layer (40) of the filter medium (16) being cut and joined, in particular welded, along the at least two longitudinal seams (18, 19), and
wherein the first medium layer (38) and the second medium layer (40) initially have a first straight base (74) and a second straight base (76) in an initial, flat, unformed state of the filter medium (16),
wherein, in a state of the layers (38, 40) of the filter medium (16) forming the frustoconical filter body (36), the longitudinal seams (18, 19) at the second end edge (14) have a longer extension in the axial direction (L) than a region at the circumference between the seams (18, 19).

10. The secondary filter element according to claim 9, wherein the end cap (20) is provided with one or more connection elements (22) which are intended to connect the secondary filter element (10) to a stand pipe (150) of the filter system (100), and/or
wherein the end cap (20) is provided with a self-positioning element (30) to arrange the secondary filter element (10) on the stand pipe (150) of the filter system (100) in a defined rotational position with respect to one or more struts (170) of the stand pipe (150) of the filter system (100).

11. The secondary filter element according to claim 10, wherein the seams (18, 19) of the filter body (36) are oriented along a projection of the self-positioning element (30) to the filter body (36).

12. The secondary filter element according to anyone of claims 9 to 11, wherein the end cap (20) has a pot-like shape and the self-positioning element (30) extends into the interior of the secondary filter medium (16), in particular, wherein the end cap (20) is provided with a projection element (32) extending in axial direction (L).

13. Method of manufacturing a filter element, especially a secondary filter element (10) for an air filter system, especially a secondary filter element (10) according to anyone of claims 9 - 12, comprising a first step of providing a first medium layer (38) of a filter medium (16) and a second medium layer (40) of the filter medium (16), being arranged one upon each other, and a second step of providing a cut of the first medium layer (38) and the second medium layer (40), the cut of the first medium layer (38) and the second medium layer (40) having a trapezoidal shape having a center line (72) of symmetry, two parallel straight bases (74, 76) and two oblique legs or sides (78, 80), wherein the shorter base (74) defines a first end edge (12) and the longer base (76) defines a second end edge (14) of the filter element (10).

14. Method according to claim 13, wherein a frustoconical filter body (36) is created in the second step by joining the legs or sides (78, 80) of the cut, in particular with a seam (18, 19), in particular by gluing, welding, sewing or the like.

15. Method according to claim 13 or 14, wherein the first medium layer (38) and the second medium layer (40) are cut and joined at the same time, in particular by welding at the legs or sides (78, 80), creating the frustoconical filter body (36), and wherein optionally at least one end cap (20) is provided at at least one axial end edge (12, 14) of the frustoconical filter body (36).

## Patentansprüche

1. Filtersystem (100) umfassend ein Gehäuse (110), einen in einer Gehäusewand (112) geformten Fluideinlass (102), einen in einer Gehäusewand (112) geformten Fluidauslass (108), ein Primärfilterelement (50) und ein Sekundärfilterelement (10), wobei beide in dem Gehäuse (110) aufgenommen sind,
wobei das Sekundärfilterelement (10) dem Primärfilterelement (50) nachgelagert auf einem kegelstumpfförmigen Standrohr (150) angeordnet ist, wobei das Standrohr (150) starr mit einer der Gehäusewände (112) verbunden ist, wobei die Innenseite des Standrohrs (150) in Fluidverbindung mit dem Fluidauslass (108) steht,
wobei das Sekundärfilterelement (10) ein Filtermedium (16) umfasst, das einen kegelstumpfförmigen Filterkörper (36) mit mindestens zwei Längsnähten (18, 19), die sich entlang einer Achsrichtung (L) erstrecken, und zwei axial beabstandeten axialen Endkanten (12, 14) bildet, wobei die erste Endkante (12) einen kleineren Umfang als die zweite Endkante (14) aufweist,
wobei der Filterkörper (36) des Sekundärfilterelements (10) eine erste Mediumschicht (38) des Filtermediums (16) und eine zweite Mediumschicht (40) des Filtermediums (16) umfasst, wobei die Mediumschichten (38, 40) entlang der mindestens zwei Längsnähten (18, 19) geschnitten und verbunden, insbesondere verschweißt sind und den kegelstumpfförmigen Filterkörper (36) bilden,
wobei die Längsnähte (18, 19) an der zweiten Endkante (14) eine längere Erstreckung in Achsrichtung (L) haben als ein Bereich am Umfang zwischen den Nähten (18, 19).

2. Filter system nach Anspruch 1, wobei am Standrohr (150) eine Abdichtstruktur (127) ausgebildet ist, wobei deren Kontur (121) komplementär zur Kontur der zweiten Endkante (14) des Sekundärfilterelements (10) ist.

3. Filtersystem nach Anspruch 2, wobei die Abdichtstruktur (127) eine Tasche (122) zur Aufnahme des Sekundärfilterelements (10) umfasst, wobei die Tasche (122) einen Boden (124) hat, der der Kontur (121) der Dichtungsstruktur (127) folgt.

4. Filtersystem nach Anspruch 3, wobei die Kontur (121) der Dichtungsstruktur (127) einen Maximalpunkt (123) und einen Minimalpunkt (125) umfasst, wobei eine Höhe (H125) des Minimalpunktes (125) geringer ist als eine Tiefe (124) der Tasche (122) am Maximalpunkt (123) in Bezug auf die Achsrichtung (L), wobei vorzugsweise eine Höhe (H125) des Minimalpunktes (125) eine kürzere Ausdehnung entlang der Achsrichtung (L), gemessen von einer Grundlinie (129), hat, als eine Ausdehnung entlang der Achsrichtung (L) von der Grundlinie (129) zum Boden (124) der Tasche (122) am Maximalpunkt (123).

5. Filtersystem nach einem der obigen Ansprüche, wobei die zweite Endkante (14) des Sekundärfilterelements (10) dicht an einer Schnittstelle zwischen einer der Gehäusewände (112) und dem Standrohr (150) angeordnet ist, und/oder
wobei das Sekundärfilterelement (10) an seiner ersten Endkante (12) eine Endkappe (20) umfasst und wobei das Sekundärfilterelement (10) und das Standrohr (150) an einem ihrer oberen Bereiche (152) und ihrer ersten Endkante (12, 152) durch Verbindungselemente (22, 156) miteinander verbunden sind.

6. Filtersystem nach einem der obigen Ansprüche, wobei das Primärfilterelement (50) und der einen der das Standrohr (150) aufnehmenden Gehäusewände (112) und der untere Abschnitt (55) des Primärfilterelements (50) mit gegenseitigen Selbstpositionierungselementen (92, 62) konfiguriert sind, um das Primärfilterelement (50) an der einen der das Standrohr (150) aufnehmenden Gehäusewände (112) in einer definierten Drehposition in Bezug auf eine oder mehrere Streben (170) des Standrohrs (150) anzuordnen, insbesondere wobei die gegenseitigen Selbstpositionierungselemente (92, 62) einen sich radial erstreckenden Vorsprung (64) und eine Führungsfläche (94) umfassen, wobei der sich radial erstreckende Vorsprung (64) so konfiguriert ist, dass er entlang der Führungsfläche (94) bei einer relativen Drehbewegung des Primärfilterelements (50) und der einen der Gehäusewände (112) um eine gemeinsame Drehachse gleitet und wobei optional der sich radial erstreckende Vorsprung (64) an der Außenseite einer offenen Endkappe (54) des Primärfilterelements (50) angeordnet ist und die Führungsfläche (94) an der Innenseite der einen der Gehäusewände (112) vorgesehen ist, die das Standrohr (150) umgibt.

7. Filtersystem nach einem der obigen Ansprüche, wobei das Sekundärfilterelement (10) und das Standrohr (150) mit gegenseitigen Selbstpositionierungselementen (30, 180) ausgebildet sind, um das Sekundärfilterelement (10) auf dem Standrohr (150) in einer definierten Drehposition in Bezug auf eine oder mehrere Streben (170) des Standrohrs (150) anzuordnen.

8. Filtersystem nach Anspruch 7, wobei die gegenseitigen Selbstpositionierungselemente (30, 180) des Sekundärfilterelements (10) und des Standrohrs (150) eine Führungsfläche (182) zwischen mindestens einem Höhepunkt (184) und mindestens einem Tiefpunkt (185) und ein Projektionselement (32) umfassen, wobei die Führungsfläche (182) dazu bestimmt ist, das Projektionselement (32) von einer Anfangsposition zu einer Endposition an dem mindestens einen Tiefpunkt (185) zu führen, in der sich das Sekundärfilterelement (10) in seiner definierten Drehposition in Bezug auf die eine oder mehrere Streben (170) des Standrohrs (150) befindet, und/oder wobei die gegenseitigen Selbstpositionierungselemente (30, 180) eine Kontur umfassen, die an einer Außenfläche des Standrohrs (150) oder des Sekundärfilterelements (10) angeordnet ist, und eine Gegenkontur an einer Innenfläche des anderen Standrohrs (150) und des Sekundärfilterelements (10).

9. Sekundärfilterelement (10) eines Filtersystems (100) nach einem der obigen Ansprüche, umfassend ein Filtermedium (16), das einen kegelstumpfförmigen Filterkörper (36) mit mindestens zwei Längsnähten (18, 19), die sich entlang einer Achsrichtung (L) erstrecken, und zwei axial beabstandeten axialen Endkanten (12, 14) bildet, wobei die erste Endkante (12) einen kleineren Umfang als die zweite Endkante (14) aufweist, und eine Endkappe (20) an seiner ersten Endkante (12),
wobei der Filterkörper (36) des Sekundärfilterelements (10) eine erste Mediumschicht (38) des Filtermediums (16) und eine zweite Mediumschicht (40) des Filtermediums (16) umfasst, die entlang der mindestens zwei Längsnähten (18, 19) geschnitten und verbunden, insbesondere verschweißt sind, und
wobei die erste Mediumschicht (38) und die zweite Mediumschicht (40) anfangs eine erste gerade Basis (74) und eine zweite gerade Basis (76) in einem anfänglichen, flachen, ungeformten Zustand des Filtermediums (16) haben,
wobei, in einem Zustand, in dem die Schichten (38, 40) des Filtermediums (16) den kegelstumpfförmigen Filterkörper (36) bilden, die Längsnähte (18, 19) an der zweiten Endkante (14) eine längere Erstreckung in Achsrichtung (L) haben als ein Bereich am Umfang zwischen den Nähten (18, 19).

10. Sekundärfilterelement nach Anspruch 9, wobei die Endkappe (20) mit einem oder mehreren Verbindungselementen (22) versehen ist, die dazu bestimmt sind, das Sekundärfilterelement (10) mit einem Standrohr (150) des Filtersystems (100) zu verbinden, und/oder
wobei die Endkappe (20) mit einem Selbstpositionierungselement (30) versehen ist, um das Sekundärfilterelement (10) auf dem Standrohr (150) des Filtersystems (100) in einer definierten Drehposition in Bezug auf eine oder mehrere Streben (170) des Standrohrs (150) des Filtersystems (100) anzuordnen.

11. Sekundärfilterelement nach Anspruch 10, wobei die Nähte (18, 19) des Filterkörpers (36) entlang einer Projektion des Selbstpositionierungselements (30) auf den Filterkörper (36) ausgerichtet sind.

12. Sekundärfilterelement nach einem der Ansprüche 9 bis 11, wobei die Endkappe (20) eine topfförmige Form hat und das Selbstpositionierungselement (30) in das Innere des Sekundärfiltermediums (16) hineinragt, insbesondere wobei die Endkappe (20) mit einem in die Achsrichtung (L) sich erstreckenden Projektionselement (32) versehen ist.

13. Verfahren zur Herstellung eines Filterelements, insbesondere eines Sekundärfilterelements (10) für ein Luftfiltersystem, insbesondere eines Sekundärfilterelements (10) nach einem der Ansprüche 9 bis 12, umfassend einen ersten Verfahrensschritt zum Bereitstellen einer ersten Mediumschicht (38) eines Filtermediums (16) und einer zweiten Mediumschicht (40) des Filtermediums (16), die aufeinander angeordnet sind, und einen zweiten Verfahrensschritt, bei dem ein Schnitt der ersten Mediumschicht (38) und der zweiten Mediumschicht (40) bereitgestellt wird, wobei der Schnitt der ersten Mediumschicht (38) und der zweiten Mediumschicht (40) eine trapezförmige Form mit einer symmetrischen Mittellinie (72) hat, zwei parallele gerade Basen (74, 76) und zwei schräge Schenkel oder Seiten (78, 80) aufweist, wobei die kürzere Basis (74) eine erste Endkante (12) und die längere Basis (76) eine zweite Endkante (14) des Filterelements (10) bildet.

14. Verfahren nach Anspruch 13, wobei ein kegelstumpfförmiger Filterkörper (36) im zweiten Schritt durch Verbinden der Schenkel oder Seiten (78, 80) des Schnitts, insbesondere mit einer Naht (18, 19), insbesondere durch Kleben, Schweißen, Nähen oder dergleichen, erzeugt wird.

15. Verfahren nach Anspruch 13 oder 14, wobei die erste Mediumschicht (38) und die zweite Mediumschicht (40) gleichzeitig geschnitten und verbunden werden, insbesondere durch Verschweißen an den Schenkeln oder Seiten (78, 80), wodurch der kegelstumpfförmige Filterkörper (36) entsteht, und wobei optional mindestens eine Endkappe (20) an mindestens einer axialen Endkante (12, 14) des kegelstumpfförmigen Filterkörpers (36) bereitgestellt ist.

## Revendications

1. Système de filtre (100) comprenant un boîtier (110), une entrée de fluide (102) formée dans une paroi de boîtier (112), une sortie de fluide (108) formée dans une paroi de boîtier (112), un élément filtrant primaire (50) et un élément filtrant secondaire (10), l'un et l'autre étant reçus dans le boîtier (110),
dans lequel l'élément filtrant secondaire (10) est agencé en aval de l'élément filtrant primaire (50) sur un tuyau vertical tronconique (150), le tuyau vertical (150) étant solidarisé à l'une des parois de boîtier (112), l'intérieur du tuyau vertical (150) étant en communication fluidique avec la sortie de fluide (108),
dans lequel l'élément filtrant secondaire (10) comprend un milieu filtrant (16) formant un corps filtrant tronconique (36) ayant au moins deux joints longitudinaux (18, 19) s'étendant dans une direction axiale (L), et deux bords d'extrémité axiaux (12, 14) espacés axialement, le premier bord d'extrémité (12) ayant une circonférence plus petite que le deuxième bord d'extrémité (14),
dans lequel le corps de filtre (36) de l'élément filtrant secondaire (10) comprend une première couche de milieu (38) du milieu filtrant (16) et une deuxième couche de milieu (40) du milieu filtrant (16), les couches de milieu (38, 40) étant coupées et assemblées, notamment soudées, le long des joints longitudinaux (18, 19), au moins au nombre de deux, et constituant le corps de filtre tronconique (36),
dans lequel les joints longitudinaux (18, 19) au niveau du deuxième bord d'extrémité (14) ont une extension plus longue en direction axiale (L) qu'une région à la circonférence entre les joints longitudinaux (18, 19).

2. Système de filtre selon la revendication 1, dans lequel une structure d'étanchéité (127) est agencée au niveau du tuyau vertical (150) dont le contour (121) est complémentaire au contour du deuxième bord d'extrémité (14) de l'élément filtrant secondaire (10).

3. Système de filtre selon la revendication 2, dans lequel la structure d'étanchéité (127) comprend une poche (122) destinée à recevoir l'élément filtrant secondaire (10), la poche (122) ayant un fond (124) suivant le contour (121) de la structure d'étanchéité (127).

4. Système de filtre selon la revendication 3, dans lequel le contour (121) de la structure d'étanchéité (127) comprend un point maximal (123) et un point minimal (125), dans lequel une hauteur (H125) du point minimal (125) est inférieure à une profondeur (124) de la poche (122) au niveau du point maximal (123) par rapport à la direction axiale (L), de préférence dans lequel une hauteur (H125) du point minimal (125) a une extension plus courte le long de la direction axiale (L) mesurée à partir d'une ligne de base (129) qu'une extension le long de la direction axiale (L) à partir de la ligne de base (129) jusqu'au fond (124) de la poche (122) au niveau du point maximal (123).

5. Système de filtre selon l'une quelconque des revendications précédentes, dans lequel le deuxième bord d'extrémité (14) de l'élément filtrant secondaire (10) est disposé à proximité d'une interface entre l'une des parois de boîtier (112) et le tuyau vertical (150), et/ou
dans lequel l'élément filtrant secondaire (10) comprend une coiffe d'extrémité (20) au niveau de son premier bord d'extrémité (12) et dans lequel l'élément filtrant secondaire (10) et le tuyau vertical (150) sont raccordés mutuellement au niveau de l'une de leurs régions supérieures (152) et de leurs bords d'extrémité (12, 152) par des éléments de raccordement (22, 156).

6. Système de filtre selon l'une quelconque des revendications précédentes, dans lequel l'élément filtrant primaire (50) et celle des parois de boîtier (112) recevant le tuyau vertical (150) et la partie inférieure (55) de l'élément filtrant primaire (50) sont configurés avec des éléments d'auto-positionnement mutuels (92, 62) pour agencer l'élément filtrant primaire (50) sur celle des parois de boîtier (112) recevant le tuyau vertical (150) dans une position de rotation définie par rapport à une ou plusieurs entretoises (170) du tuyau vertical (150), notamment dans lequel les éléments d'auto-positionnement mutuels (92, 62) comprennent une partie saillante (64) s'étendant radialement et une surface de guidage (94), la partie saillante (64) s'étendant radialement étant configurée pour glisser le long de la surface de guidage (94) lors d'un mouvement de rotation relatif de l'élément filtrant primaire (50) et de la paroi de boîtier précitée (112) autour d'un axe de rotation commun, et dans lequel, en option, la partie saillante s'étendant radialement (64) est disposée à l'extérieur d'une coiffe d'extrémité ouverte (54) de l'élément filtrant primaire (50) et la surface de guidage (94) est prévue à l'intérieur de l'une des parois de boîtier (112) entourant le tuyau vertical (150).

7. Système de filtre selon l'une quelconque des revendications précédentes, dans lequel l'élément filtrant secondaire (10) et le tuyau vertical (150) sont configurés avec des éléments d'auto-positionnement mutuels (30, 180) pour agencer l'élément filtrant secondaire (10) sur le tuyau vertical (150) dans une position de rotation définie par rapport à une ou plusieurs entretoises (170) du tuyau vertical (150).

8. Système de filtre selon la revendication 7, dans lequel les éléments d'auto-positionnement mutuels (30, 180) de l'élément filtrant secondaire (10) et du tuyau vertical (150) comprennent une surface de guidage (182) entre au moins un point haut (184) et au moins un point bas (185) et un élément protubérant (32), dans lequel la surface de guidage (182) est prévue pour guider l'élément protubérant (32) d'une position initiale à une position finale au niveau du point bas (185), au moins au nombre d'un, où l'élément filtrant secondaire (10) est dans sa position de rotation définie par rapport à l'entretoise ou aux entretoises (170) du tuyau vertical (150), et/ou dans lequel les éléments d'auto-positionnement mutuels (30, 180) comprennent un contour agencé au niveau d'une surface extérieure du tuyau vertical (150) et l'élément filtrant secondaire (10), et un contour antagoniste au niveau d'une surface intérieure de l'autre tuyau vertical (150) et l'élément filtrant secondaire (10).

9. Élément filtrant secondaire (10) d'un système de filtre (100) selon l'une quelconque des revendications précédentes, comprenant un milieu filtrant (16) formant un corps filtrant tronconique (36) avec au moins deux joints longitudinaux (18, 19) s'étendant dans une direction axiale (L), et deux bords d'extrémité axiaux (12, 14) espacés axialement, dans lequel le premier bord d'extrémité (12) ayant une circonférence plus petite que le deuxième bord d'extrémité (14), et une coiffe d'extrémité (20) au niveau de son premier bord d'extrémité (12),
dans lequel le corps de filtre (36) de l'élément filtrant secondaire (10) comprend une première couche de milieu (38) du milieu filtrant (16) et une deuxième couche de milieu (40) du milieu filtrant (16) coupées et reliées, notamment soudées, le long des joints longitudinaux (18, 19), au moins au nombre de deux, et
dans lequel la première couche de milieu (38) et la deuxième couche de milieu (40) ont initialement une première base droite (74) et une deuxième base droite (76) dans un état initial, plat, non formé du milieu filtrant (16),
dans lequel, dans un état des couches (38, 40) du milieu filtrant (16) formant le corps de filtre tronconique (36), les joints longitudinaux (18, 19) au niveau du deuxième bord d'extrémité (14) ont une extension plus longue en direction axiale (L) qu'une région à la circonférence entre les joints longitudinaux (18, 19).

10. Élément filtrant secondaire selon la revendication 9, dans lequel la coiffe d'extrémité (20) est pourvue d'un ou plusieurs éléments de raccordement (22) qui sont prévus pour raccorder l'élément filtrant secondaire (10) à un tuyau vertical (150) du système de filtre (100), et/ou
dans lequel la coiffe d'extrémité (20) est pourvue d'un élément d'auto-positionnement (30) pour agencer l'élément filtrant secondaire (10) sur le tuyau vertical (150) du système de filtre (100) dans une position de rotation définie par rapport à une ou plusieurs entretoises (170) du tuyau vertical (150) du système de filtre (100).

11. Élément filtrant secondaire selon la revendication 10, dans lequel les joints (18, 19) du corps de filtre (36) sont orientées le long d'une projection de l'élément d'auto-positionnement (30) sur le corps de filtre (36).

12. Élément filtrant secondaire selon l'une quelconque des revendications 9 à 11, dans lequel la coiffe d'extrémité (20) a une forme semblable à un pot et l'élément d'auto-positionnement (30) s'étend dans l'intérieur du milieu filtrant secondaire (16), notamment dans lequel la coiffe d'extrémité (20) est pourvue d'un élément protubérant (32) s'étendant dans la direction axiale (L).

13. Procédé de fabrication d'un élément filtrant, spécialement d'un élément filtrant secondaire (10) pour un système de filtration d'air, spécialement d'un élément filtrant secondaire (10) selon l'une quelconque des revendications 9 à 12, comprenant une première étape consistant à prévoir une première couche de milieu (38) d'un milieu filtrant (16) et une deuxième couche de milieu (40) du milieu filtrant (16), disposées l'une sur l'autre, et une deuxième étape consistant à prévoir une découpe de la première couche de milieu (38) et de la deuxième couche de milieu (40), la découpe de la première couche de milieu (38) et de la deuxième couche de milieu (40) ayant une forme trapézoïdale ayant une ligne médiane (72) de symétrie, deux bases droites parallèles (74, 76) et deux branches ou côtés obliques (78, 80), dans lequel la base la plus courte (74) définit un premier bord d'extrémité (12) et la base la plus longue (76) définit un deuxième bord d'extrémité (14) de l'élément filtrant (10).

14. Procédé selon la revendication 13, dans lequel un corps de filtre tronconique (36) est créé dans une deuxième étape en reliant les branches ou côtés (78, 80) de la coupe, notamment avec un joint (18, 19), notamment par collage, soudage, couture ou un procédé similaire.

15. Procédé selon la revendication 13 ou 14, dans lequel la première couche de milieu (38) et la deuxième couche de milieu (40) sont coupées et assemblées en même temps, notamment par soudage au niveau des branches ou des côtés (78, 80), en formant le corps de filtre tronconique (36), et dans lequel, en option, au moins une coiffe d'extrémité (20) est prévue sur au moins une arête d'extrémité axiale (12, 14) du corps de filtre tronconique (36).
